(19) Europäisches Patentamt
European Patent Office
Office européen des brevets

(11) Veröffentlichungsnummer : **0 411 471 B1**

(12) # EUROPÄISCHE PATENTSCHRIFT

(45) Veröffentlichungstag der Patentschrift :
**07.01.93 Patentblatt 93/01**

(51) Int. Cl.[5] : **C01B 33/107,** C07F 7/12

(21) Anmeldenummer : **90114312.3**

(22) Anmeldetag : **26.07.90**

(54) **Verfahren zur Dismutierung von Chlorsilanen.**

(30) Priorität : **31.07.89 DE 3925357**

(43) Veröffentlichungstag der Anmeldung :
**06.02.91 Patentblatt 91/06**

(45) Bekanntmachung des Hinweises auf die Patenterteilung :
**07.01.93 Patentblatt 93/01**

(84) Benannte Vertragsstaaten :
**AT BE CH DE DK ES FR GB IT LI LU NL**

(56) Entgegenhaltungen :
**EP-A- 0 072 435**
**EP-A- 0 151 991**
**EP-A- 0 286 074**
**DE-A- 3 412 705**

(56) Entgegenhaltungen :
**US-A- 4 613 491**
**PATENT ABSTRACTS OF JAPAN, Band 12, Nr. 472 (C-551)(3319), 9. Dezwmber 1988; & JP-A-63192787 (MITSUI TOATSU) 10.08.1988**

(73) Patentinhaber : **Degussa Aktiengesellschaft**
**Weissfrauenstrasse 9**
**W-6000 Frankfurt am Main 1 (DE)**

(72) Erfinder : **Klockner, Hans-Jürgen, Dr.**
**1181 Rose Thorne**
**Oakville, Ontario L6M1H5 (CA)**
Erfinder : **Panster, Peter, Dr.**
**Im Lochseif 8**
**W-6458 Rodenbach (DE)**
Erfinder : **Kleinschmit, Peter, Dr.**
**Wildaustrasse 19**
**W-6450 Hanau 9 (DE)**

EP 0 411 471 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Reinstsilicium für die Halbleiterindustrie wird heutzutage nahezu vollständig durch Pyrolyse eines Trichlorsilan-Wasserstoff-Gemischs hergestellt. Verwendet man Dichlorsilan an Stelle von Trichlorsilan, lassen sich bei dieser Abscheidung bedeutend höhere Raum/Zeit-Ausbeuten realisieren. Auch die irreversible Pyrolyse von Monosilan erlaubt die Herstellung von Reinstsilicium mit hohen Raum/Zeit-Ausbeuten.

Andererseits läßt sich Dichlorsilan in der Organosilanchemie für die Herstellung von Diorganohalogensilanen des Typs $R_2SiCl_2$ durch doppelte Hydrosilylierung verwenden. Mit diesen Diorganosilanen können durch Kettenverlängerung lineare Organopolysiloxane oder bei Anwesenheit funktioneller Gruppen im Organorest durch Kettenvernetzung dreidimensional vernetzte Polymere erhalten werden.

Einen besonders günstigen Zugang zu Dichlorsilan und zu Monosilan erlaubt die Dismutierung von Chlorsilanen. Dichlorsilan wird durch Dismutierung von Trichlorsilan an einem Katalysator nach folgender Gleichung erhalten:

$$2\ SiHCl_3 \rightleftarrows SiH_2Cl_2 + SiCl_4$$

Monosilan kann katalytisch durch Dismutierung von Dichlorsilan nach folgender Gleichung erhalten werden:

$$3\ SiH_2Cl_2 \rightleftarrows SiH_4 + 2\ SiHCl_3$$

Beide Reaktionen sind Gleichgewichtsreaktionen; es stellt sich bei unendlich langer Reaktionszeit ein nur von der Temperatur und von den Partialdrucken der Reaktanden abhängiges Gleichgewicht ein.

Es ist eine Vielzahl von Verfahren zur Dismutierung von Chlorsilanen beschrieben worden, bei denen die Umsetzung mit einem in den Chlorsilanen löslichen Katalysator durchgeführt wurde. Auch ist es möglich, die Dismutierung in einem mit den Chlorsilanen mischbaren Reaktionsmedium, in dem der Katalysator gelöst ist, zu vollziehen. Alle diese Verfahren leiden jedoch unter den teuren und oft schwierigen Trennproblemen.

Insofern liegt es nahe, heterogene Katalysatoren zu verwenden, die in den Chlorsilanen nicht löslich sind. So wird in CA-PS 1 184 017, CA-PS 1 162 028, DE-PS 33 11 650, DE-PS 25 07 864 und DE-PS 21 62 537 die Verwendung des schwachbasischen Ionenaustauschers AMBERLYST® A-21 beschrieben, bei dem Dimethylaminogruppierungen an ein Polystyrolgerüst gebunden sind. In der EP-A-206 621 wird als Katalysator das Reaktionsprodukt aus tri-n-Butylamin mit dem Ionenaustauscher LEWATIT® SPC-118 erwähnt. In DE-OS 34 12 705 ist die Verwendung eines schwachbasischen Anionenaustauschers mit einer aromatischen heterocyclischen Base als funktioneller Gruppe beschrieben.

In JP 60/77120 A2 wird dafür der Ionenaustauscher DUOLITE® ES-467, der Amino und Phosphonsäuregruppen enthält, erwähnt. In DOE/JPL/955533-83/7 wird dafür der methylamingruppenhaltige Anionenaustauscher DOWEX® MWA-1 vorgeschlagen. Schließlich erwähnt noch die EP-A-138 669 basische Ionenaustauscherharze als Katalysatoren.

Allen diesen beschriebenen Verfahren ist gemeinsam, daß als heterogene Katalysatoren zur Dismutierung von Chlorsilanen Ionenaustauscher auf Basis organischer Polymerer verwendet werden. Diese organischen Polymeren besitzen jedoch keineswegs ideale Eigenschaften in bezug auf thermische und mechanische Stabilität, Inertness gegenüber chemischen Angriffen, Zugänglichkeit der funktionellen Gruppen und Löslichkeit im verwendeten Solvens. Es können deshalb Probleme dadurch auftreten, daß die organische Matrix nicht im erforderlichen Umfang druck- und temperaturstabil ist oder im verwendeten Reaktionsmedium zu stark quillt, angelöst wird, verklebt oder die funktionellen Gruppen mangelhaft oder überhaupt nicht zugänglich sind oder eine relativ rasche Aminabspaltung stattfindet.

Daneben ist es aus EP-A-286 074 bekannt, mit Amino-alkyl-silyl-grüppen modifizierte Siloxane zur Disproportionierung von Dichlormethylsilan zü verwenden.

Aufgabe der Erfindung ist es, Katalysatoren für die Chlorsilan-Dismutierung zu finden, die die oben beschriebenen Nachteile organischer Ionenaustauscher nicht aufweisen und ein geeignetes Dismutierungsverfahren unter Einsatz dieser Katalysatoren zu schaffen.

Diese Aufgabe wird erfindungsgemäß dadurch gelöst, daß zur Chlorsilan-Dismutierung polymere Organosiloxanaminund Organosiloxanammoniumverbindungen in reiner Form oder als Copolykondensate verwendet werden, die Eigenschaften, wie festliegende Struktur, Nichtquellbarkeit, eine hohe Temperaturbeständigkeit, Unlöslichkeit und gute Zugänglichkeit der funktionellen Gruppen besitzen und keine Neigung zu einer Aminabspaltung aufweisen. Diese Polymeren können geformt als auch ungeformt in der Gas- oder Flüssigphase eingesetzt werden.

Gegenstand der Erfindung ist demgemäß ein Verfahren zur Dismutierung von Chlorsilanen, insbesondere von Trichlorsilan und Dichlorsilan, welches in den Patentansprüchen 1 - 4 gekennzeichnet ist.

Die im Anspruch 1 und den Unteransprüchen 2 - 4 unter A) - D) angegebenen Katalysatoren sind bezüglich ihrer Zusammensetzungen und Erhältlichkeiten in folgenden deutschen Patenten und Patentanmeldungen der Anmelderin ausführlich beschrieben:

| | | |
|---|---|---|
| Typ A) | ungeformt: | P 31 20 214 v. 21.5.1981 (81 155 VA) |
| " | geformt: | P 38 00 563 v. 12.1.1988 (88 103 VA) |
| Typ B) | ungeformt: | P 38 37 418 v. 4.11.1988 (88 211 VA) |
| " | geformt: | P 39 25 359.7 v.31.7.1989 (89 161 VA) |
| Typ C) | ungeformt: | P 38 37 416 v. 4.11.1988 (88 212 VA) |
| " | geformt: | P 39 25 360.0 v.31.7.1989 (89 162 VA) |
| Typ D) | ungeformt: | P 31 20 195 v. 21.5.1981 (81 157 VA) |
| " | geformt: | P 38 00 564 v. 12.1.1988 (88 104 VA) |

Auf den Inhalt dieser Patentanmeldungen wird zur ergänzenden Beschreibung der Katalysatorstoffe und ihrer Herstellbarkeit ausdrücklich Bezug genommen.

Im wesentlichen waren für die einzelnen Katalysatortypen zum Zeitpunkt ihrer Offenbarung folgende im Rahmen dieser Erfindung bedeutsame Verwendbarkeiten bekannt:

| | |
|---|---|
| Für Typ A): | Entfernung von Säuren aus Flüssigkeiten und Gasen; |
| " " B): | Entfernung von gelösten Metallen aus flüssiger waßriger oder organischer Phase nach dem statischen oder dynamischen Prinzip; |
| " " C): | Entfernung von gelösten Metallen aus flüssiger wäßriger oder organischer Phase nach dem statischen oder dynamischen Prinzip; |
| " " D): | Ionenaustausch bzw. Entfernung von Metallanionen aus Lösungen. |

Mittels dieser Katalysatorstoffe auf Polyorganosiloxanbasis lassen sich mit hoher Raum/Zeit-Ausbeute sowohl in flüssiger Phase als auch in der Gasphase Chlorsilane dismutieren. So läßt sich z. B. Trichlorsilan zu Dichlorsilan und Siliciumtetrachlorid und Dichlorsilan zu Monosilan, Monochlorsilan und Trichlorsilan dismutieren.

Ausführungsbeispiele

Es wurden folgende Katalysatoren auf Polyorganosiloxanbasis in getrockneter Form und als Vergleichskatalysator AMBERLYST®A-21 eingesetzt:

| Bezeichnung | Formel |
|---|---|
| I | $N[(CH_2)_3SiO_{3/2}]_3$ (Typ A) |
| II | $N[(CH_2)_3SiO_{3/2}]_3 \cdot SiO_2$ (Typ A, vernetzt) |
| III | $HN[(CH_2)_3SiO_{3/2}]_2 \cdot 0{,}2\ N[(CH_2)_3SiO_{3/2}]_3 \cdot SiO_2$ (Typ B, vernetzt) |
| IV | $[H_2N-(CH_2)_2-NH-(CH_2)_2-NH-(CH_2)_3SiO_{3/2}] \cdot N[(CH_2)_3-SiO_{3/2}]_3$ (Typ C) |
| V | $\{(H_3C)N[(CH_2)_3SiO_{3/2}]_3\}^+Cl^-$ (Typ D) |
| VI | $H_2N-(CH_2)_3SiO_{3/2} \cdot N[(CH_2)_3SiO_{3/2}]_3$ (Typ C) |
| Amberlyst A-21 | Polystyrolgerüst 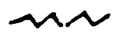 $N(CH_3)_2$ |

Der Katalysator wurde jeweils in ein thermostatisiertes Rohr von 1,4 cm Durchmesser in einer Schütthöhe von jeweils 22 cm eingefüllt. Die Drucke lagen zwischen 1 und 10 bar absolut. Die zudosierte Menge an Chlorsilan wurde gemessen und das entstehende Produktspektrum gaschromatographisch bestimmt. Die Ergebnisse sind in nachstehender Tabelle aufgeführt.

| Beisp. | Katalys. | Einges. Chlors. | Chlors.-Dosierg. (g/min) | Katalys.-temp. | Chlorsilan-Phase im Katalysat. | Druck (bar absol.) | Verweilz. im Kat. | Produktzusammensetzung (Mol%) $SiCl_4$ | $SiHCl_3$ | $SiH_2Cl_2$ | $SiH_3Cl$ | $SiH_4$ |
|---|---|---|---|---|---|---|---|---|---|---|---|---|
| 1 | I | $SiHCl_3$ | 18 | 60° C | Gasphase | 1 | 0,6 | 13 | 77 | 9 | 1 | - |
| 2 | II | $SiHCl_3$ | 3,8 | 60° C | Gasphase | 1 | 2,8 | 13 | 77 | 9 | 1 | - |
| 3 | III | $SiHCl_3$ | 7,5 | 60° C | Gasphase | 5 | 7,0 | 9 | 83 | 7 | 1 | - |
| 4 | IV | $SiHCl_3$ | 1,8 | 60° C | Gasphase | 1 | 5,9 | 13 | 77 | 9 | 1 | - |
| 5 | V | $SiHCl_3$ | 3,5 | 60° C | Gasphase | 1 | 3,0 | 15 | 76 | 8 | 1 | - |
| 6 | VI | $SiHCl_3$ | 10,0 | 100° C | Gasphase | 1 | 1,1 | 11 | 80 | 8 | 1 | - |
| 7 | Amberlyst A-21 | $SiHCl_3$ | 3,7 | 60° C | Gasphase | 1 | 2,8 | 13 | 78 | 8 | 1 | - |
| 8 | IV | $SiHCl_3$ | 5,3 | 25° C | Flüssigph. | 1 | 530 | 6 | 92 | 3 | 1 | - |
| - | Gleichgew. Beding.+) | $SiHCL_3$ | - | 60° C |  | 1 | > $10^4$ | 9,1 | 81 | 9,8 | 0,4 | - |
| 9 | IV | $SiH_2Cl_2$ | 1,4 | 60° C | Gasphase | 1 | 6,7 | 0,2 | 33 | 45 | 16 | 5 |
| 10 | I | $SiH_2Cl_2$ | 1,8 | 60° C | Gasphase | 1 | 5,2 | 0,5 | 40 | 39 | 12 | 9 |
| 11 | IV | $SiH_2Cl_2$ | 10,7 | 80° C | Gasphase | 10 | 5,0 | 0,2 | 38 | 42 | 12 | 8 |
| - | Gleichgew. Beding.+) | $SiH_2Cl_2$ | - | 60° C | - | 1 | > $10^4$ | 0,3 | 32,6 | 39 | 16 | 11,6 |

*) nach Literaturstelle DOE/JPL/954 334-10, Seite 187

## Patentansprüche

1. Verfahren zur Dismutierung von Chlorsilanen, insbesondere von Trichlorsilan und Dichlorsilan, **dadurch gekennzeichnet**, daß man die Chlorsilane in gasförmiger oder flüssiger Phase bei einer Temperatur im Bereich von 55 - 100° C in der Gasphase und von 25 - 55° C bzw. bei erhöhtem Druck bis 100° C in der flüssigen Phase mit einer Verweilzeit von 0,01 - 100, vorzugsweise 1 - 10 sec. in der Gasphase und von 1 - 1000, vorzugsweise 1 - 550 sec. in der Flüssigphase im Druckbereich von 1 - 10 bar absolut über einen ungeformten, stückig oder als Pulver vorliegenden oder über einen geformten, in Kugelform vorliegenden Katalysator aus einer der folgenden, eine Amino-oder Ammoniumgruppierung als funktionelle Gruppe tragenden Organopolysiloxane mit den Zusammensetzungen A) - D) leitet:

A) Tertiäres oder sekundäres, gegebenenfalls mittels Si-, Ti- und/oder Al-haltigen Vernetzern vernetztes Polyorganosiloxanamin

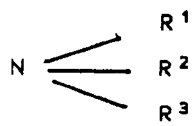,

wobei

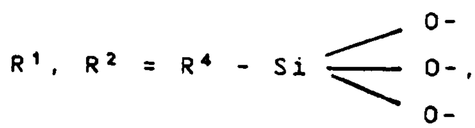

worin

$R^4$ = Alkylen mit $C_1$-$C_{10}$, Cycloalkylen mit $C_5$-$C_8$ oder

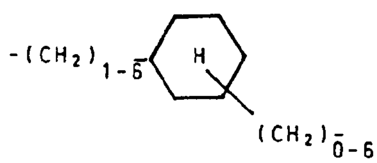 bzw. 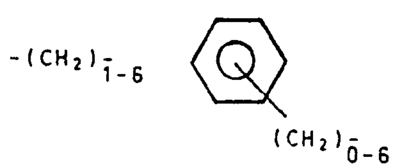

$R^3$ = $R^1$ oder $R^2$, H, Alkyl mit $C_1$ -$C_{10}$, Cycloalkyl mit $C_5$-$C_8$ oder Benzyl;

B) Gegebenenfalls mittels Si-, Ti-, Zr- und/oder Al-haltigen Vernetzern vernetztes Organosiloxanamin-Copolykondensat aus Einheiten

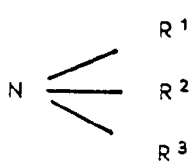 und 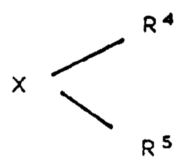,

wobei

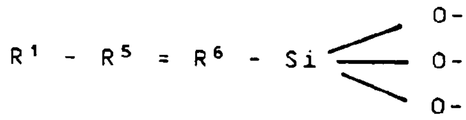 ,

worin $R^6$ = direkt an N bzw. X gebundenes Alkylen mit $C_1$-$C_{10}$, Cycloalkylen mit $C_5$-$C_8$ oder

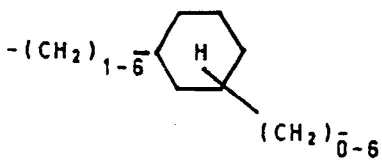 bzw. 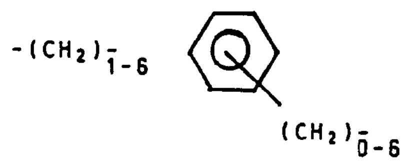

$X = >N-H, \quad >N-CH_3, \quad >N-C_2H_5,$

$-S-, \quad -S_2-, \quad -S_3-, \quad -S_4-, \quad >P-C_6H_5,$

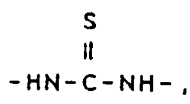, 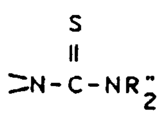, 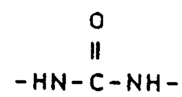,

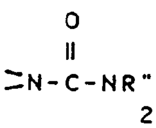 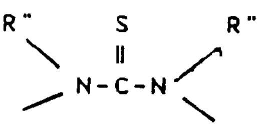, 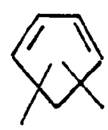,

wobei R″ = H oder Alkyl mit $C_1$-$C_5$;

C) Gegebenenfalls mittels Si-, Ti-, Zr- und/oder Al-haltigen Vernetzern vernetztes Organosiloxanamin-Copolykondensat aus Einheiten

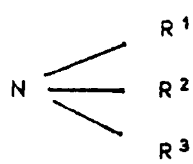

und X - $R^4$

wobei

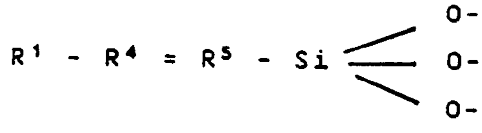 ,

worin

$R^5$ = direkt an N bzw. an X gebundenes Alkylen mit $C_1$-$C_{10}$, Cycloalkylen mit $C_5$-$C_8$ oder

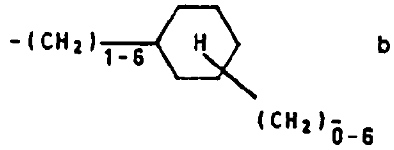 bzw. 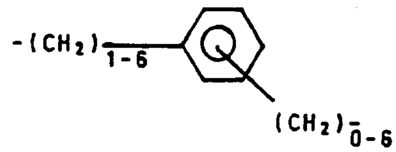

X = $-NH_2$, $-NH-(CH_2)_2-NH_2$, $-N(CH_3)_2$, $-N(C_2H_5)_2$,

$-NH-(CH_2)_2-NH-(CH_2)_2-NH_2$,

$-Cl$, $-Br$, $-J$, $-SH$, $-P(C_6H_5)_2$,

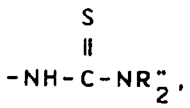 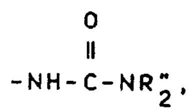 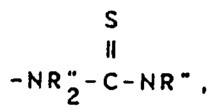

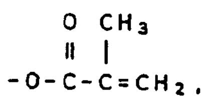 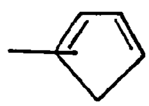 ,

wobei R″ = H oder Alkyl mit $C_1$-$C_5$;

D) Gegebenenfalls mittls Si-, Ti- und/oder Al-haltigen Vernetzern vernetzte polymere Ammoniumverbindungen

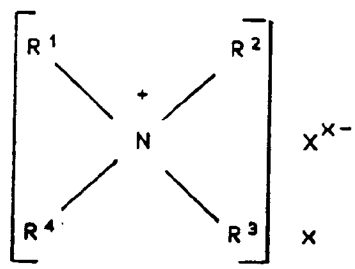

wobei

$R^1$, $R^2$ = 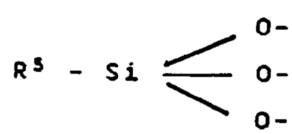

worin

$R^5$ = Alkylen mit $C_1$-$C_{10}$, Cycloalkylen mit $C_5$-$C_8$ oder

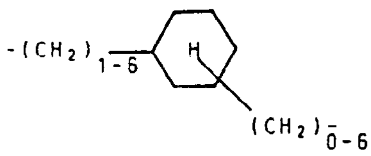

bzw.

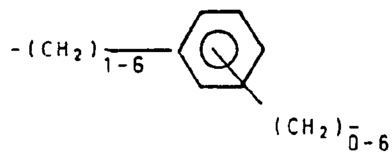

$R^3$ und/oder $R^4$ = $R^1$ und $R^2$ oder H, Alkyl mit $C_1$-$C_{20}$, Cycloalkyl mit $C_5$-$C_8$ oder Benzyl
X = 1 - 3 wertiges Anion.

2. Verfahren nach Anspruch 1,
**dadurch gekennzeichnet,**
daß man als Katalysator entweder
den Typ A) als tertiäres polymeres Amin aus Einheiten

$N(CH_2\text{-}CH_2\text{-}CH_2SiO_{3/2})_3$ oder

den Typ B) als statistisches Copolykondensat, Block-Copolykondensat oder als Gemisch davon mit einem Verhältnis

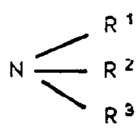 : 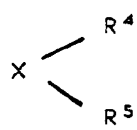 = 0.01 : 99.99 bis 99.99 : 0.01 Mol %

oder
den Typ C) als statistisches Copolykondensat, Block-Copolykondensat oder als Gemisch davon mit einem Verhältnis

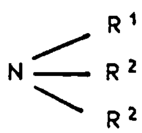 : $X\text{-}R^4$ = 0.01 : 99.99 bis 99.99 : 0.01 Mol %

oder
den Typ D) als polymere Ammoniumverbindung aus Einheiten

$[CH_3C)N(CH_2CH_2CH_2SiO_{3/2})_3]^+ Cl^-$ oder

aus Einheiten

$[(N(CH_2CH_2CH_2SiO_{3/2})_4]^+ Cl^-$

einsetzt.

3. Verfahren nach Anspruch 1 oder 2,
**dadurch gekennzeichnet,**
daß die stückigen bis pulverförmigen Typen A) -D) mit folgenden Stoffeigenschaften zum Einsatz kommen:
einer spezifischen Oberfläche von 0.1 - 3000 $m^2/g$ und einem Teilchendurchmesser von 1 cm - 1 µm bei Typ A),
einer spezifischen Oberfläche von 0.1 - 1000 $m^2$ /g und einem Teilchendurchmesser von 1 cm - 1 µm bei Typen B) und C) und
einer spezifischen Oberfläche von 0.1 - 2000 $m^2/g$ und einem Teilchendurchmesser von 1 cm - 1 µm, vorzugsweise 0.1 - 1.5 mm, bei Typ D).

4. Verfahren nach Anspruch 1 oder 2,
**dadurch gekennzeichnet,**
daß die kugelförmigen Typen A) - D) mit folgenden Stoffeigenschaften zum Einsatz kommen:
Typ A) als makroskopisch kugelförmige Teilchen mit einem Durchmesser von 0.01 - 3.0 mm, einer spezifischen Oberfläche von 0.1 - 1000 $m^2/g$, einem spezifischen Porenvolumen von 0 - 6,0 ml/g sowie einer Schüttdichte von 50 - 1000 g/l;

Typen B) und C) als makroskopisch kugelförmige Teilchen mit einem Durchmesser von 0.01 - 3.0, vorzugsweise 0.1 - 2.0 mm, einer spezifischen Oberfläche von 0.1 - 1000 $m^2/g$, vorzugsweise 0 - 700 $m^2/g$, einem spezifischen Porenvolumen von 0 - 6.0 ml/g sowie einer Schüttdichte von 50 - 1000, vorzugsweise 100 - 800 g/l;

Typ D) als makroskopisch kugelförmige Teilchen mit einem Durchmesser von 0.01 - 3.0 mm, einer spezifischen Oberfläche von 0.1 - 1000 $m^2/g$, einem spezifischen Porenvolumen von 0 - 5.0 ml/g, einer Schüttdichte von 50 - 1000 g/l sowie einer volumenbezogenen Trockensubstanz von 50 - 750 g/l.

## Claims

1. A process for the dismutation of chlorosilanes, in particular trichlorosilane and dichlorosilane, characterised in that the chlorosilanes are passed in gaseous form or in the liquid phase, at a temperature of from 55 - 100°C if in the gaseous phase and from 25 - 55°C or, at elevated pressure, at temperatures of up to 100°C in the liquid phase over an unformed, particulate or pulverulent catalyst or a formed, spherical catalyst with a residence time of from 0.01 - 100 sec, preferably from 1 - 10 sec, in the gaseous phase and from 1-1000, preferably from 1 - 550 sec. in the liquid phase in the pressure range of from 1 to 10 bar absolute, which catalyst consists of one of the following organopolysiloxanes carrying an amino or ammonium group as functional group and having the compositions A) - D):

A) Tertiary or secondary polyorganosiloxanamine corresponding to the following formula optionally cross-linked with cross-linking agents containing Si, Ti and/or Al:

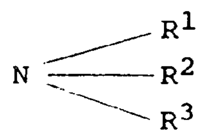

wherein

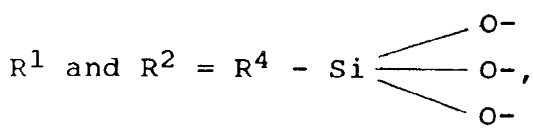

wherein
$R^4$ = $C_1$ - $C_{10}$-alkylene, $C_5$ - $C_8$-cycloalkylene or

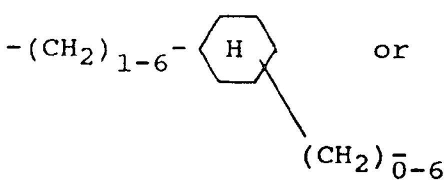

or

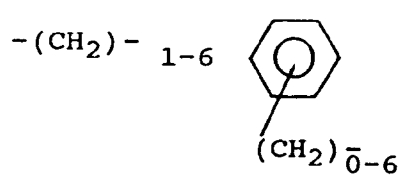

$R^3$ = $R^1$ or $R^2$, H, $C_1$-$C_{10}$-alkyl, $C_5$-$C_8$-cycloalkyl or benzyl;

B) organosiloxanamine copolycondensate composed of the following units and optionally cross-linked with cross-linking agents containing Si, Ti, Zr and/or Al:

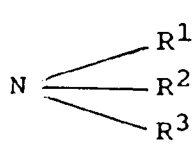

and

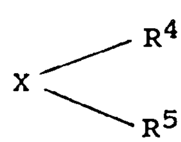

wherein

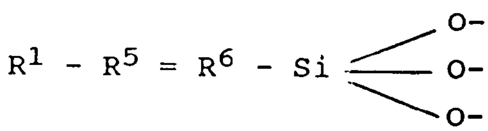

wherein

$R^6$ is a $C_1$-$C_{10}$-alkylene directly attached to N or X, a $C_5$-$C_8$-cycloalkylene or

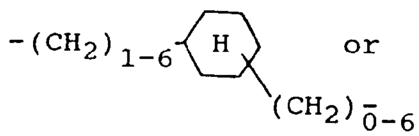 or 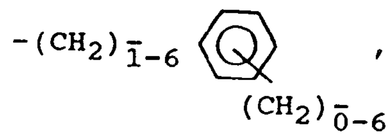 ,

and

$X = \geq N-H, \geq N-CH_3, \geq N-C_2H_5,$

$-S-, -S_2-, -S_3-, -S_4-, \geq P-C_6H_5,$

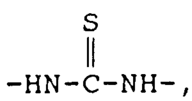 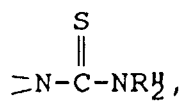 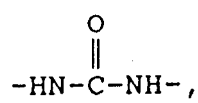

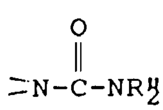 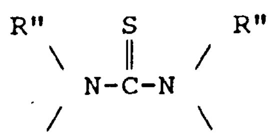 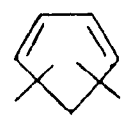

wherein R″ = H or $C_1$-$C_5$-alkyl;

C) organosiloxanamine copolycondensate optionally cross-linked with cross-linking agents containing Si, Ti, Zr and/or Al and consisting of units of the following formula:

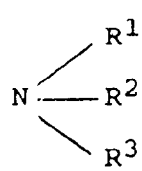

and X - $R^4$

wherein

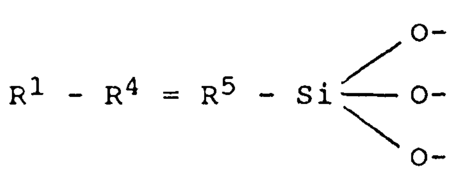 ,

wherein

$R^5$ is a $C_1$-$C_{10}$ alkylene directly attached to N or to X, or a $C_5$-$C_8$ cycloalkylene or

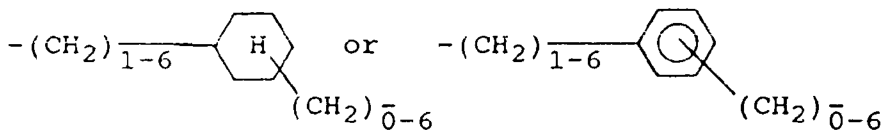

or

$X = -NH_2, -NH-(CH_2)_2-NH_2, -N(CH_3)_2, -N(C_2H_5)_2,$
$-NH-(CH_2)_2-NH-(CH_2)_2-NH_2,$
$-Cl, -Br, -I, -SH, -P(C_6H_5)_2,$

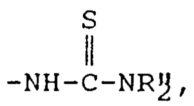 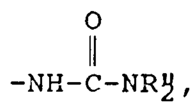 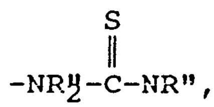

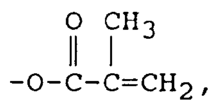 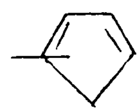

wherein R″ = H or $C_1$-$C_5$-alkyl

D) Polymeric ammonium compounds optionally cross-linked with cross-linking agents containing Si, Ti and/or Al and corresponding to the following formula

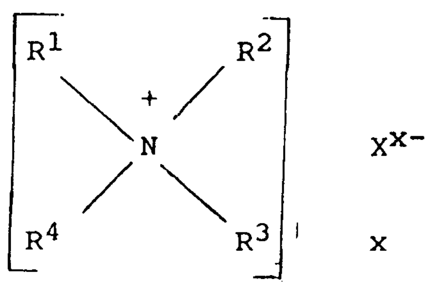

wherein

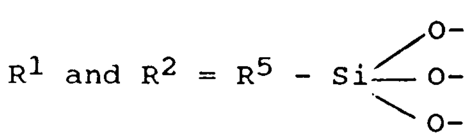

,

wherein

$R^5$ = $C_1$-$C_{10}$ alkylene, $C_5$-$C_8$ cycloalkylene or

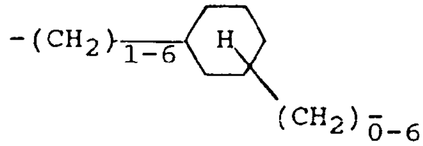 or 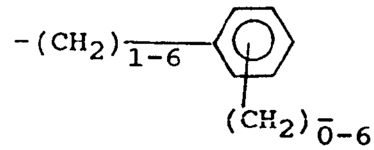

$R^3$ and/or $R^4$ = $R^1$ and $R^2$ or H, $C_1$-$C_{20}$-alkyl, $C_5$-$C_8$-cycloalkyl or benzyl, and X = a mono- to trivalent anion.

2. A process according to Claim 1, characterised in that the catalyst used is either a tertiary polymeric amine of type A) consisting of units of the formula

$N(CH_2\text{-}CH_2\text{-}CH_2SiO_3/_2)_3$ or

a type B) catalyst consisting of a randomly structured copolycondensate, a block copolycondensate or a mixture thereof in a ratio of

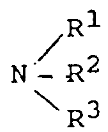 : 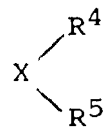 = from 0.01 : 99.99 to 99.99 : 0.01 mol %

or

a type C) catalyst consisting of a randomly structured copolycondensate, a block copolycondensate or a mixture thereof in a ratio of

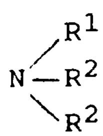 : $X\text{-}R^4$ = from 0.01 : 99.99 to 99.99 : 0.01 mol %

or

a type D) catalyst consisting of a polymeric ammonium compound of units of

$[CH_3C)N(CH_2CH_2CH_2SiO_{3/2})_3]^+ Cl^-$ or

units of

$[(N(CH_2CH_2CH_2SiO_{3/2})_4]^+ Cl^-$.

3. A process according to Claim 1 or 2, characterised in that the particulate to pulverulent types A) -D) used have the following material properties:

a specific surface area of from 0.1 - 3000 $m^2/g$ and a particle diameter of from 1 cm - 1 $\mu m$ in the case of type A),

a specific surface area of from 0.1 - 1000 $m^2/g$ and a particle diameter of from 1 cm - 1$\mu m$ in the case of types B) and C) and

a specific surface area from 0.1 - 2000 $m^2/g$ and a particle diameter of from 1 cm - 1 $\mu m$, preferably from 0.1 - 1.5 mm, in the case of type D).

4. A process according to Claim 1 or 2, characterised in that the spherical particles of types A) - D) are used with the following material properties:

Type A) as macroscopic spherical particles having a diameter of from 0.01 - 3.0 mm, a specific surface area of from 0.1 - 1000 $m^2/g$, a specific pore volume of from 0 - 6.0 ml/g and a bulk density of from 50 - 1000 g/l;

Types B) and C) as macroscopic spherical particles having a diameter of from 0. 01 - 3.0 mm, preferably from 0.1 - 2.0 mm, a specific surface area of from 0.1 - 1000 $m^2/g$, preferably from 0 - 700 $m^2.g$, a specific pore volume of from 0 - 6. 0 ml/g and a bulk density of from 50 - 1000 g/l, preferably from 100 - 800 g/l;

Type D) as macroscopic spherical particles having a diameter of from 0.01 - 3.0 mm, a specific

surface area of from 0.1 - 1000 $m^2/g$, a specific pore volume of from 0 - 5.0 ml/g, a bulk density of from 50 - 1000 g/l and a solids content, based on the volume, of from 50 - 750 g/l.

## Revendications

1. Procédé de dismutation des chlorosilanes, en particulier du trichlorosilane et du dichlorosilane, caractérisé en ce que l'on amène les chlorosilanes en phase sous forme gazeuse ou liquide, à une température dans la zone de 55 à 100°C, dans la phase gazeuse, et de 25 à 55°C ou à pression augmentée jusqu'à 100°C dans la phase liquide, avec un temps de séjour de 0,01 à 100 - de préférence 1 à 10 s. dans la phase gazeuse, et de 1 à 1000 de préférence de 1 à 550 s. dans la phase liquide dans la zone de pressions de 1 à 10 bars absolus, sur un catalyseur non moulé, en fragments ou se présentant sous forme pulvérulente ou sur un catalyseur moulé, se présentant sous forme de billes, à base d'un organopolysiloxane portant un groupement amino ou un groupement ammonium comme groupe fonctionnel ayant les compositions A à D,

A) une polyorganosiloxanamine secondaire ou tertiaire, éventuellement réticulée par des agents réticulants renfermant du Si, du Ti et/ou de l'Al :

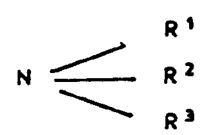

dans laquelle

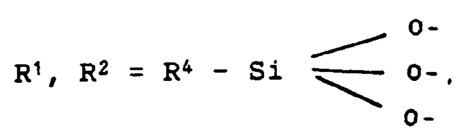

dans lequel $R^4$ = alcoylène avec $C_1$-$C_{10}$ cycloalcoylène avec $C_5$-$C_8$ ou

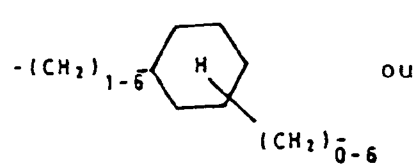

ou

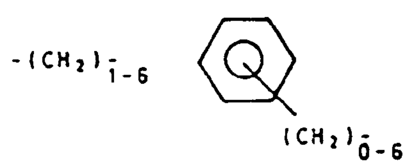

$R^3$ = $R^1$ ou $R^2$, H, alcoyle avec $C_1$-$C_{10}$, cycloalcoyle avec $C_5$-$C_8$ ou benzyle.

B) un copolycondensat d'organosiloxanamine éventuellement réticulé à l'aide d'agents réticulants contenant Si-, Ti-, Zr- et/ou Al formé d'unités :

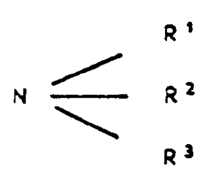

et

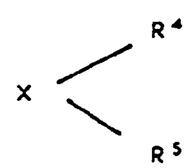

.

dans lesquelles

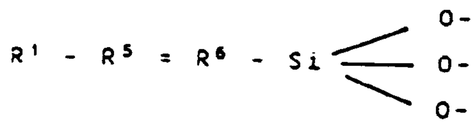

où $R^6$ est un alcoylène directement relié à l'azote ou à X, ayant de 1 à 10 atomes de carbone, un cycloalcoylène avec $C_5$-$C_8$ ou :

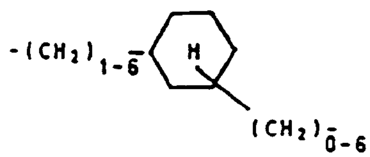

ou

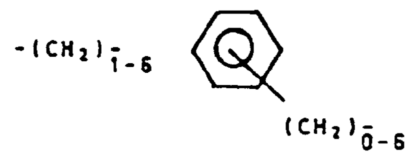

X = ≥N-H, ≥N-$CH_3$, ≥N-$C_2H_5$,

-S-, -$S_2$-, -$S_3$-, -$S_4$-, ≥P-$C_6H_5$,

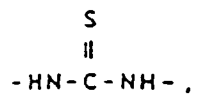

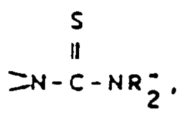

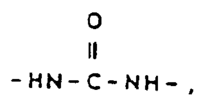

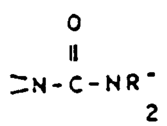

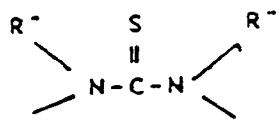

,

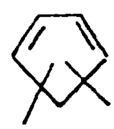

,

dans lequel R″ = H ou un alcoyle avec $C_1$-$C_5$

C) un copolycondensat d'organosiloxanamine éventuellement réticulé à l'aide d'agents de réticulation contenant du Si-, du Ti-, du Zr- et/ou de l'Al, formé d'unités :

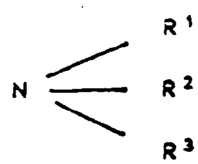

et X -$R^4$

dans lesquelles

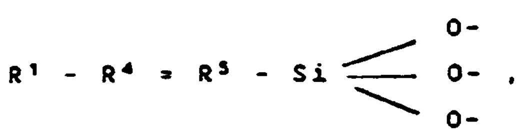

où $R^5$ est un alcoylène ayant de $C_1$-$C_{10}$ directement relié à N ou à X, un cycloalcoylène avec $C_5$-$C_8$ ou :

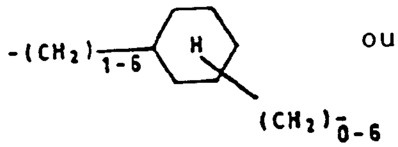 ou 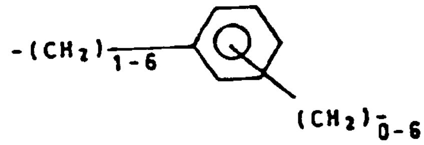

$X = -NH_2,\ -NH-(CH_2)_2-NH_2,\ -N(CH_3)_2,\ -N(C_2H_5)_2,$

$-NH-(CH_2)_2-NH-(CH_2)_2-NH_2,$

$-Cl,\ -Br,\ -J,\ -SH,\ -P(C_6H_5)_2,$

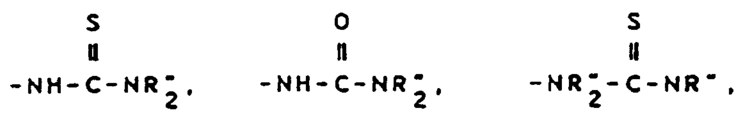

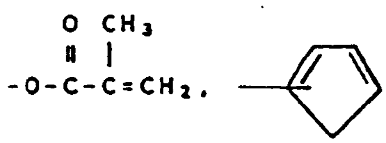 ,

R″ = H ou un alcoylène avec $C_1$-$C_5$ ;

D) Des composés d'ammonium polyméres éventuellement réticulés à l'aide d'agents de réticulation contenant du Si, du Ti, et/ou de l'Al :

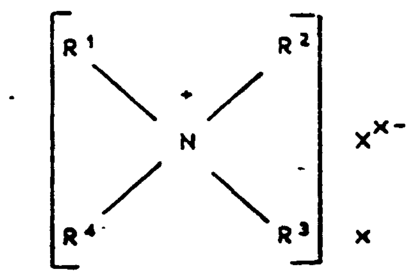

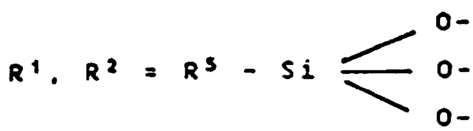

$R^5$ = alcoylène avec $C_1$-$C_{10}$, cycloalcoylène avec $C_5$-$C_8$ ou :

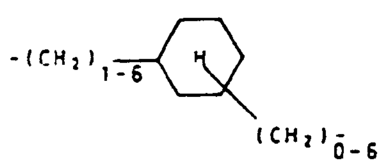 ou 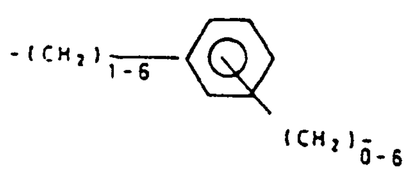

$R^9$ et/ou $R^4$ = $R^1$ et $R^2$ ou H, un alcoyle avec $C_1$-$C_{20}$, un cycloalcoyle avec $C_5$-$C_8$ ou benzyle,
X = anion mono-, di- ou trivalent.

2. Procédé selon la revendication 1, caractérisé en ce que l'on met en oeuvre comme catalyseur soit le type A comme amine polymére tertiaire formé d'unités :

$$N(CH_2\text{-}CH_2\text{-}CH_2SiO_{3/2})_3$$

soit le type B comme copolycondensat statistique, un copolycondensat en bloc ou comme mélange de ceux-ci avec un rapport

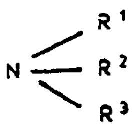 : 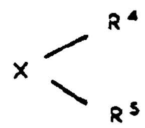 = 0.01 : 99.99 bis 99.99 : 0.01 % en mole

ou le type C) comme copolycondensat statistique, un copolycondensat en bloc ou comme mélange de ceux-ci avec le rapport :

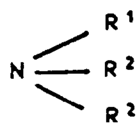 : $X-R^4$ = 0.01 : 99.99 bis 99.99 : 0.01% en mole

ou le type D) comme composé d'ammonium polymére formé d'unités :

$$[CH_3C)N(CH_2CH_2CH_2SIO_{3/2})_3]^{+}\cdot Cl^{-}$$

ou d'unités :

$$[N(CH_2CH_2CH_2SiO_{3/2})_4]^{+} Cl^{-}$$

3. Procédé selon la revendication 1 ou la revendication 2, caractérisé en ce que les types A-D en morceaux jusqu'à la forme pulvérulente viennent en action avec les propriétés suivantes de substances,
   - une surface spécifique de 0,1 à 3000 $m^2/g$ et un diamètre de particules de 1 cm à 1 μm pour le type A),
   - une surface spécifique de 0,1 à 1000 $m^2/g$ et un diamètre de particules de 1 cm à 1 μm pour les types B) et C) et,

   une surface spécifique de 0,1 à 2000 $m^2/g$ et un diamètre de particules de 1 cm à 1 μm de préférence 0,1 à 1,5 mm pour le type D.

4. Procédé selon la revendication 1 ou la revendication 2, caractérisé en ce que les types A)-D) en forme de billes entrent en action avec les propriétés suivantes de substances :
   Type A : sous forme de particules sphériques macroscopiquement ayant un diamètre de 0,01 à 3,0 mm, une surface spécifique de 0,1 - 1000 $m^2/g$, un volume spécifique de pores de 0 à 6,0 ml/g ainsi qu'une densité apparente de 50 à 1000 g/l,
   Types B) et C) sous forme de particules macroscopiquement sphériques ayant un diamètre de 0,01 à 3,0, de préférence de 0,1 à 2,0 mm, une surface spécifique de 0,1 à 1000 $m^2/g$ - de préférence de 0 à 700 $m^2/g$, un volume spécifique des pores de 0 à 6,0 ml/g ainsi qu'une densité apparente de 50 à 1000 - de préférence de 100 à 800 g/l,
   Type D) sous forme de particules macroscopiquement sphériques ayant un diamètre de 0,01 à 3,0 mm, une surface spécifique de 0,1 à 1000 $m^2/g$, un volume spécifique de pores de 0 à 5,0 ml/g, une densité apparente de 50 à 1000 g/l ainsi qu'une teneur en substance sèche rapportée au volume de 50 à 750 g/l.